# EUROPÄISCHE PATENTSCHRIFT

(11) **EP 2 323 741 B1**
(45) Veröffentlichungstag und Bekanntmachung des Hinweises auf die Patenterteilung: **29.02.2012**
(21) Anmeldenummer: 09775623.3
(22) Anmeldetag: 04.09.2009
(51) Int. Cl.: A63G 29/02, A63B 19/02, B62D 57/00

(54) **FAHRZEUG**
VEHICLE
VEHICULE

(30) Priorität: 17.09.2008 AT 14482008
(43) Veröffentlichungstag der Anmeldung: 25.05.2011
(73) Patentinhaber: Mondl, Peter, 3384 Gross Sierning (AT)
(72) Erfinder: Mondl, Peter, 3384 Gross Sierning (AT)
(74) Vertreter: Sonn & Partner Patentanwälte
(86) Internationale Anmeldenummer: PCT/AT2009/000345
(87) Internationale Veröffentlichungsnummer: WO 2010/031093

(56) Entgegenhaltungen:
- DE-A1-102004 033 820
- DE-U- 1 638 606
- GB-A- 1 292 441
- US-A- 2 267 254
- US-A- 4 386 787
- US-A- 5 064 210

## Beschreibung

Die vorliegende Erfindung betrifft ein Fahrzeug, mit einem um eine Rotationsachse angeordneten rotationssymmetrischen, insbesondere kugelförmigen, Gehäuse mit einer nach außen gewölbten Antriebs- und Lauffläche, wobei das Gehäuse zumindest teilweise aus transparentem Material gebildet ist, und zumindest eine Türe zum Ein- und Aussteigen zumindest einer Person aufweist, und im Inneren des Gehäuses ein Sitz für die zumindest eine Person, ein Antrieb zur Versetzung des Gehäuses in Rotation, und weiters eine Einrichtung zur Steuerung vorgesehen ist, wobei in der Rotationsachse des Gehäuses Lager zur drehbaren Lagerung eines den Sitz aufnehmenden Sitzunterbaus vorgesehen sind, und der Antrieb am Sitzunterbau angeordnet und mit diesem verbunden ist.

Die Fortbewegung des Fahrzeuges erfolgt durch die Rotation des vorzugsweise um die Rotationsachse symmetrisch angeordneten Gehäuses sowohl zu Wasser als auch an Land. Das Fahrzeug gemäß der vorliegenden Erfindung ist hauptsächlich für Anwendungen in der Freizeit gedacht, obgleich andere Anwendungen nicht ausgeschlossen sind.

Aus der DE 1 638 606 U ist ein kugelförmiges Fahrzeug aus Plexiglas mit einer Einstiegsöffnung bekannt, in dessen Inneren sich ein kleines, motorbetriebenes Fahrgestell befindet, dessen Antriebskraft über ein oder mehrere Zahnräder auf den Untergrund übertragen wird. Dieses Fahrzeug kann über Land und Wasser fahren und wird durch Gewichtsverlagerung gelenkt. Das kugelförmige Gehäuse kann aus einem oder mehreren Teilen bestehen. Um die Stabilität des Fahrzeugs bei Fahrten an Land zu optimieren, können Stützräder, die gleichzeitig als Antriebsräder fungieren, verwendet werden.

Die RU 2 297 356 C2 zeigt ein Fahrzeug mit einem kugelförmigen Gehäuse, in dessen Innenraum eine Kabine für den Fahrer drehbar angeordnet ist. Der Antrieb des Fahrzeuges erfolgt über ein Antriebsrad an der Unterseite der Kabine, dessen Geschwindigkeit vom Fahrer reguliert werden kann. Über eine Winkeländerung des Antriebsrades kann das Fahrzeug gelenkt werden.

Bei der BE 899 473 A wird ein kugelförmiges Fahrzeug beschrieben, in dessen Innenraum ein beweglich gegenüber dem Gehäuse gelagerter Sitz angeordnet ist. An der Unterseite des Fahrgestells befindet sich.der Antrieb. Die Lenkung erfolgt über eine Gewichtsverlagerung des Fahrer.

Die GB 2 239 636 A beschreibt ein Fahrzeug mit einem hohlen kugelförmigen Körper mit einer fixen zentralen Achse, um die er rotiert. Die Kabine ist mit einem Mechanismus ausgestattet, der sie in aufrechter Position hält, und weist Antriebseinheiten auf, welche die Kabine um ihre eigene Achse in Rotation versetzen.

Die US 4 729 446 A zeigt ein gitterartiges, kugelförmiges Gebilde, dessen horizontale Achse mit einem Motor verbunden ist.

Auch aus der US 4 501 569 A, der US 4 386 787 A und der US 2 035 192 A sind verschiedene Fahrzeuge mit kugelförmigem Gehäuse mit einem drehbar gelagerten Sitz im Inneren der Kugel bekannt.

Die US 2 267 254 A beschreibt ein Fahrzeug der gegenständlichen Art, wobei die Lenkung durch seitliche Verschiebung eines unter dem Sitz angeordneten Gewichts erfolgt. Beim Lenken nimmt der Fahrer gezwungenermaßen eine schräge Position ein, wodurch nur ein beschränkter Lenkeinsatz möglich ist. Durch den zweischaligen Aufbau des Gehäuses des Fahrzeuges ist ein relativ hoher Aufwand verbunden. Darüber hinaus wird das Ein- und Aussteigen durch die beiden Schalen des Gehäuses erschwert.

Die FR 2 626 548 A1 zeigt ein Fahrzeug mit einem kugelförmigen Gehäuse für die Verwendung zu Wasser, wobei die Lenkung mit einem Ruder in ähnlicher Weise, wie bei einem Boot, vorgenommen wird.

Nachteilig bei bekannten Systemen ist, dass aufgrund der auftretenden hohen Kräfte zur Vermeidung von Verformungen des Gehäuses schwere Konstruktionen erforderlich sind, um das Eigengewicht der Kugel und das Gewicht des Fahrgestells, das sich im Inneren der Kugel befindet, zu tragen. Auch bei der Steuerung und Stabilität weisen bisherige Fahrzeuge Nachteile auf.

Ein Ziel der vorliegenden Erfindung ist die Schaffung eines oben genannten Fahrzeuges; welches die Nachteile des Standes der Technik vermeidet oder zumindest stark reduziert und eine optimale Steuerung zulässt. Das Fahrzeug soll möglichst einfach und robust aufgebaut sein und möglichst kostengünstig gefertigt werden können, sodass eine breite Anwendung sichergestellt werden kann. Weiters soll das Fahrzeug entsprechende Sicherheitsbestimmungen erfüllen.

Gelöst wird die erfindungsgemäße Aufgabe dadurch, dass der Sitz seitlich gegenüber dem Sitzunterbau verschiebbar angeordnet ist. Das Fahrzeug rollt direkt an der Antriebs- und Lauffläche des Gehäuses ab. Durch die Vermeidung von Laufreifen befindet sich der Kippmittelpunkt über der Rotationsachse des Gehäuses, was der ganzen Konstruktion mehr Gleichgewichtsstabilität verleiht und es dem Fahrer somit ermöglicht, aus einer starken Gewichtsverlagerung wieder in seine Ausgangsposition zurückzukehren. Ein unkontrolliertes, seitliches Kippen kann nicht vorkommen. Dadurch, dass der Sitzunterbau mit dem Sitz und - während des Betriebes der Person - in der Rotationsachse des Gehäuses aufgehängt ist, wirken keine so großen Kräfte auf das Gehäuse, weshalb dieses leichter ausgeführt werden kann. Für den Sitzunterbau können zudem andere, bedeutend stabilere Materialien eingesetzt werden als durchsichtige Kunststoffe. Ein Steuern des Fahrzeuges erfolgt durch seitliches Verschieben des Sitzes gegenüber dem Sitzunterbau. Durch dieses Lenkprinzip unterscheidet sich das gegenständliche Fahrzeug deutlich von den Konstruktionen des Standes der Technik. Dadurch, dass der Antrieb am Sitzunterbau angeordnet und mit diesem verbunden ist, wird das Gewicht des Antriebs auch in die Rotationsachse des Gehäuses eingeleitet. Die Türe muss so konstruiert sein, dass ein Ein- bzw. Aussteigen der Person vom Land bzw. Wasser aus möglich ist. Die Türe kann an einer geeigneten Stelle des Gehäuses entsprechend platziert werden. Auch besteht die Möglichkeit das Gehäuse in zwei Teile zu teilen, wobei ein Teil gegenüber dem anderen aufklappbar ausgebildet ist.

Der Sitz ist vorzugsweise zumindest um 180° (d.h. jeweils 90° nach rechts bzw. links) gegenüber dem Sitzunterbau verschiebbar angeordnet. Wird der Sitz um 90° nach rechts oder links gegenüber dem Sitzunterbau verschoben, so ist die Rotationsachse im Wesentlichen senkrecht zum Untergrund orientiert. Wird in dieser Position im Falle eines kugelförmigen Gehäuses der Sitzunterbaus gegenüber dem Gehäuse angetrieben, so rotiert dieser um die senkrecht stehende Rotationsachse, was ein Drehen des Gehäuses am Stand (d.h. ohne Vorwärtsbewegung) bewirkt. Wird der Sitz um 180° nach rechts oder links gegenüber dem Sitzunterbau verschoben, so ist die Rotationsachse im Wesentlichen wie vor der Rotation wieder horizontal zum Untergrund orientiert, jedoch hat sich durch die fixe Verbindung des Antriebs mit dem Sitzunterbau dessen Position geändert. Der Antrieb befindet sich nach einer 180° Drehung nun nicht mehr unter dem Sitz, sondern genau darüber. Dadurch kann ohne Änderung der Antriebsrichtung des Antriebs ein Richtungswechsel des Fahrzeugs erzielt werden. Die oben genannten Antriebs- und Lenkprinzipien, insbesondere das "Lenken am Stand" und ein "Richtungswechsel ohne Änderung des Antriebs" stellen wesentliche Merkmale der gegenständlichen Konstruktion dar.

Der Antrieb kann mit einem in der Rotationsachse des Gehäuses drehfest mit dem Gehäuse verbundenen Koppelelement gekoppelt sein. Bei dieser Ausführungsform erfolgt die Kraftübertragung direkt auf die Rotationsachse. Zwischen dem Antrieb und dem Koppelelement kann natürlich ein Getriebe zur Verbesserung der Kraftübertragung eingesetzt werden.

Alternativ dazu kann der Antrieb auch mit einer Innenfläche des Gehäuses gekoppelt sein.

Die Kopplung des Antriebs mit dem Koppelelement oder der Innenfläche des Gehäuses kann durch Zahnräder oder Treibräder erfolgen.

Vorteilhafterweise ist der Antrieb durch einen Elektromotor gebildet. Alternative Ausführungsformen, beispielsweise Verbrennungskraftmotoren, oder ein mechanischer Tretantrieb sind auch denkbar.

Für einen besseren Antrieb, insbesondere zu Wasser, aber auch eine bessere Steuerbarkeit können an der Antriebs- und Lauffläche des Gehäuses Antriebselemente, beispielsweise Schaufeln, angeordnet sein.

Diese Antriebselemente bzw. Schaufeln können vorzugsweise wechselbar ausgebildet sein.

Die Antriebselemente bzw. Schaufeln können entlang der mittigen Umfangslinie der Antriebs- und Lauffläche des Gehäuses oder auch beiderseits neben der mittigen Umfangslinie der Antriebs- und Lauffläche des Gehäuses angeordnet sein.

Wenn die Antriebselemente bzw. Schaufeln im Gehäuse versenkbar oder wegklappbar angeordnet sind, können sie beispielsweise bei der Fortbewegung zu Lande eingefahren und bei der Fortbewegung zu Wasser ausgefahren werden.

Zur Steuerung des Fahrzeuges kann eine Einrichtung zur elektrischen Verschiebung des Sitzes gegenüber dem Sitzunterbau vorgesehen sein.

Um ein Kippen des im Wasser befindlichen Fahrzeuges während des Ein- und Aussteigens der Person zu erschweren, können im bzw. am Gehäuse Luftkammern zur Stabilisierung angeordnet sein. Derartige Luftkammern können im Falle der Verwendung des Fahrzeuges im Wasser auch im Fall des Wassereintritts in das Gehäuse ein Sinken verhindern. Auch kann durch Fluten derartiger Luftkammern insbesondere während des Ein- und Aussteigens eine Erhöhung der Stabilität erzielt werden. Ein derartiges Fluten der Luftkammern kann unter Zuhilfenahme einer entsprechenden Pumpe bewerkstelligt werden.

Im Falle außen am Gehäuse angebrachter Luftkammern können diese vorzugsweise einzeln wegklappbar ausgeführt sein.

Um das Fahrzeug bei Nichtbenutzung insbesondere zu Wasser zu fixieren kann ein Ankersystem vorgesehen sein. Dieses Ankersystem kann verschiedenartig ausgebildet sein.

Wenn zwischen Sitzunterbau und Sitzfläche eine Vorrichtung zum Verstellen der Sitzfläche gegenüber dem Sitzunterbau vorgesehen ist, kann einerseits eine Anpassung an die Größe der jeweiligen Person und andererseits eine Veränderung des Schwerpunkts vorgenommen werden. Auch kann durch eine derartige Verstellvorrichtung die Stabilität während des Ein- und Aussteigens und der Fahrt erhöht werden..Je nach gewünschter Sensibilität kann der Schwerpunkt während der Fahrt nach oben oder unten verschoben werden, wohingegen der Schwerpunkt beim Ein- und Aussteigen für maximale Stabilität an seine tiefste Stelle verschoben wird.

Vorzugsweise ist die zumindest eine Türe im geöffneten.Zustand als Ausleger zur Stabilisierung des Gehäuses ausgebildet. Zu Wasser ist insbesondere ein kugelförmiges Gehäuse besonders instabil, wodurch ein Ein- und Aussteigen erschwert würde. Die im geöffneten Zustand als Ausleger ausgebildete Tür minimiert diese Instabilität während des Ein- oder Aussteigens.

Dabei ist es von Vorteil, wenn die zumindest eine Tür doppelwandig ausgebildet ist, sodass im Inneren eine Luftkammer gebildet wird, welche als Auftriebskörper der Tür dient.

Zusätzlich kann die Stabilität des Fahrzeuges bei geöffneter Türe dadurch verbessert werden, dass die zumindest eine Türe an der Außenseite zumindest eine Finne aufweist, welche Finne im geschlossenen Zustand der Tür einfahrbar oder einklappbar ist. Bei geöffneter Tür und ausgeklappter bzw. ausgefahrener Finne würde die Tür die Stabilität quer zur Fahrtrichtung und die Finne die Stabilität längsseits zur Fahrtrichtung verbessern.

Um eine Frischluftzufuhr zu gewährleisten und eine Überhitzung im Inneren des Gehäuses zu vermeiden, sind vorteilhafterweise im Gehäuse Luftöffnungen vorgesehen. Um bei der Fahrt über Wasser einen Wassereintritt ins Innere des Gehäuses zu verhindern, können die Luftöffnungen mit Rückschlagklappen oder dgl. versehen sein.

Diese Luftöffnungen sind bevorzugt im Wesentlichen in der Rotationsachse des Gehäuses angeordnet.

Durch zumindest einen Ventilator in zumindest einer Luftöffnung kann eine Zirkulation der Luft erzeugt werden.

Alternativ dazu sind auch andere rotationssymmetrische Formen mit nach außen gewölbter Antriebs- und Lauffläche, beispielsweise die Form eines Ellipsoids, für das Gehäuse möglich. Wesentlich für gute Lauf- und Steuerungseigenschaften ist, dass die Lauffläche nicht zu breit ist.

Das Gehäuse ist vorzugsweise aus Kunststoff gebildet, allenfalls durch entsprechende Maßnahmen verstärkt.

Im Folgenden wird die Funktion des Fahrzeugs anhand der beigefügen Figuren, welche ein Äusführungsbeispiel der Erfindung schematisch zeigen, im Detail beschrieben. Dabei zeigen:
Fig. 1 einen Querschnitt durch eine Ausführungsform eines Fahrzeuges mit einem kugelförmigen Gehäuse in Fahrtrichtung gesehen;
Fig. 2A und 2B Querschnitte durch eine weitere Ausführungsform eines Fahrzeuges in Fahrtrichtung und quer zur Fahrtrichtung gesehen;
Fig. 3 eine isometrische Ansicht auf eine Ausführungsform des Fahrzeuges mit geöffneter Tür; und
Fig. 4 eine isometrische Ansicht des Sitzes und Sitzunterbaus samt Antrieb gemäß einer Ausführungsform des Fahrzeuges.

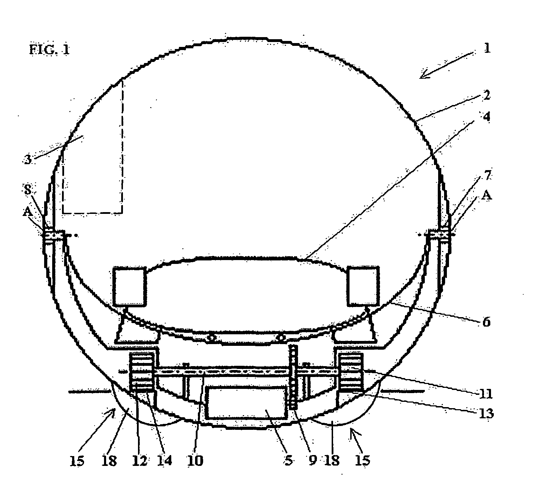

Fig. 1 zeigt einen Querschnitt durch eine Ausführungsform eines Fahrzeuges 1 gemäß der vorliegenden Erfindung. Das Gehäuse 2 des Fahrzeuges 1 ist im dargestellten Beispiel kugelförmig ausgebildet. Es sind aber auch andere rotationssymmetrische Formen mit einer nach außen gewölbten Antriebs- und Lauffläche für das Gehäuse 2, beispielsweise ein Ellipsoid, denkbar. Zum Ein- und Aussteigen des Fahrers befindet sich im Gehäuse 2 an einer geeigneten Stelle zumindest eine Türe 3. Um dem Fahrer eine Sicht nach außen zu ermöglichen, ist das Gehäuse 2 zumindest teilweise aus transparentem Material gebildet. Im Inneren des Gehäuses 2 ist ein Sitz 4 für zumindest eine Person angeordnet. Ein Antrieb 5, der durch einen Elektromotor gebildet sein kann, versetzt das Gehäuse 2 in Rotation. Die Fortbewegung des Fahrzeuges 1 auf dem Wasser oder an Land erfolgt durch Abrollen des Gehäuses 2. Über eine Steuerungseinrichtung kann das Fahrzeug 1 gelenkt werden. Erfindungsgemäß ist der Sitz 4 auf einem Sitzunterbau 6 angeordnet, der in Lagern 7, 8, die in der Rotationsachse A des Gehäuses 2 angeordnet sind, drehbar gelagert ist. Durch diese aufhängung des Sitzes 4 werden optimale Kräfteverteilungen erzielt, wodurch das Gehäuse 2 nicht so hohen Kräften ausgesetzt ist und schließlich leichter ausgeführt werden kann. Für eine Steuerung des Fahrzeuges 1 ist der Sitz 4 seitlich gegenüber dem Sitzunterbau 6 verschiebbar angeordnet. Um eine optimale Lenkmöglichkeit zu gewährleisten ist der Sitz 4 vorzugsweise um zumindest 180°, optimal um 360°, gegenüber dem Sitzunterbau 6 verschiebbar angeordnet. Wird der Sitz 4 gegenüber dem Sitzunterbau 6 um 90° nach rechts oder links verschoben, ist im Falle eines kugelförmigen Gehäuses 2 die Rotation des Gehäuses 2 am Stand möglich. Dabei ist die Rotationsachse A senkrecht zum Boden orientiert. Bei der Verdrehung des Sitzes 4 gegenüber dem Sitzunterbau 6 um 180° nach rechts oder links, wird ein Richtungswechsel des Fahrzeuges 1 um 180° erzielt.

Im dargestellten Ausführungsbeispiel ist der Antrieb 5 unterhalb des Sitzes 4 und Sitzunterbaus 6 angeordnet und vorzugsweise mit diesem fix verbunden. Der Antrieb erfolgt über ein Getriebe 9 auf eine Welle 10, an der Treibräder 11, 12 befestigt sind. Die Treibräder 11, 12 rollen auf entsprechend gestalteten Abrollflächen 13, 14 im Inneren des Gehäuses 2 ab und versetzten somit das Gehäuse in eine Rotationsbewegung um die Rotationsachse A. Für eine Verbesserung des Antriebs, hauptsächlich im Wasser, können an der Lauf- und Antriebsfläche des Gehäuses 2 Antriebselemente 15 beispielsweise in der Form von Schaufeln 18 angeordnet sein.

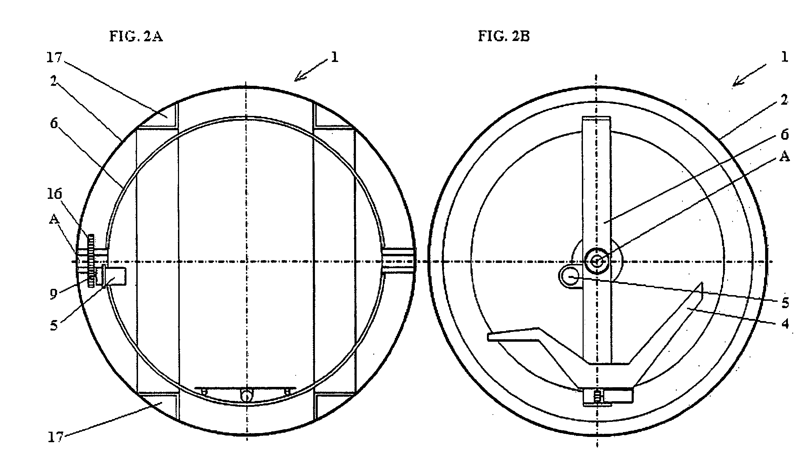

In den Fig. 2A und 2B werden zwei Ansichten einer weiteren Ausführungsform der Erfindung dargestellt, bei der der Sitz 4 auf einem kreisförmigen Sitzunterbau 6 verschiebbar gelagert ist. Der Antrieb 5 wirkt im dargestellten Beispiel direkt bzw. über ein Getriebe 9 auf ein Koppelelement 16 in der Rotationsachse A des Gehäuses 2. Bei Verschiebung des Sitzes 4 um 180° kann eine komplette Richtungsänderung erzielt werden, wohingegen bei Verstellung des Sitzes 4 gegenüber dem Sitzunterbau 6 um weniger als 90° eine entsprechende Lenkung des Fahrzeuges 1 erzielt werden kann. Bei Verschiebung des Sitzes 4 gegenüber dem Sitzunterbau 6 um genau 90° steht die Rotationsachse A im Wesentlichen senkrecht zum Untergrund. Im Falle der Anordnung entsprechender Antriebselemente 15 (siehe Fig. 1) an der Außenseite des Gehäuses 2 kann ein Lenken mit extrem geringen Radien ermöglicht werden. Die.Verstellung des Sitzes 4 gegenüber dem Sitzunterbau 6 kann elektrisch oder mechanisch erfolgen. Im Inneren des Gehäuses 2 oder außen am Gehäuse 2 können Luftkammern 17 angeordnet sein, welche zur Stabilisierung bei der Verwendung des Fahrzeuges 1 im Wasser dienen. Im Falle außen am Gehäuse 2 angeordneter Luftkammern 17 können diese vorzugsweise einzeln wegklappbar ' ausgebildet sein. Wie bereits erwähnt können bestimmt angeordnete Luftkammern im oder am Gehäuse 2 auch mit Wasser geflutet werden und so insbesondere während des Ein- und Aussteigens eine stabilere Lage des Fahrzeugs 1 im Wasser erreicht werden (nicht dargestellt).

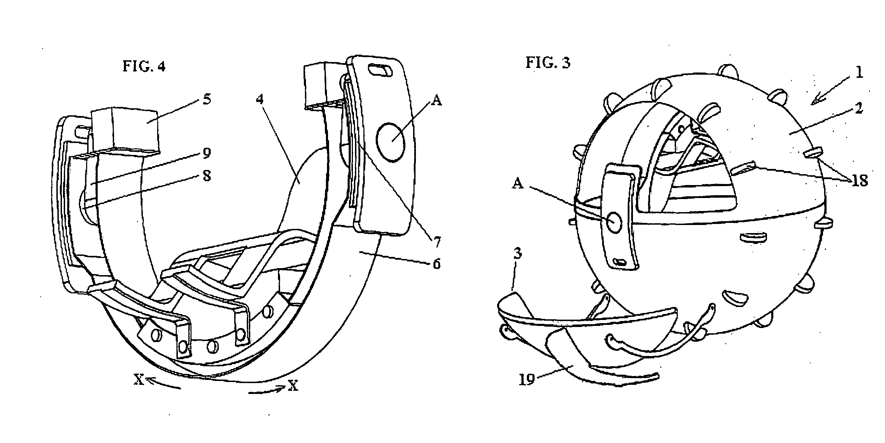

Fig. 3 zeigt eine isometrische Ansicht einer weiteren Ausführungsform des erfindungsgemäßen Fahrzeuges 1 mit einem kugelförmigen Gehäuse 2. Um die Rotationsachse A sind zwei Reihen von Schaufeln 18 angeordnet, welche vorzugsweise einklappbar oder einziehbar ausgebildet sind, sodass ein Fahren mit dem Fahrzeug 1 zu Land ebenfalls ermöglicht wird. Die Türe 3 ist im geöffneten Zustand als Ausleger ausgebildet, welcher dem Fahrzeug 1 während des Ein- und Aussteigens eine Stabilität verleiht. Weiter verbessert wird dies dadurch, dass die Tür 3 vorzugsweise doppelwandig ausgebildet ist und somit im Inneren der Tür 3 eine Luftkammer gebildet wird. Zusätzlich kann eine Finne 19 noch weitere Stabilität während des Ein- und Aussteigens schaffen. Die Finne 19 ist im geschlossenen Zustand der Türe 3 einfahrbar oder an das Gehäuse 2 des Fahrzeuges 1 anklappbar ausgebildet.

Fig. 4 zeigt noch eine Detailansicht des Antriebs und Lenkmechanismus des erfindungsgemäßen Fahrzeuges 1, wobei der Sitz 4 seitlich um je 90° gegenüber dem Sitzunterbau 6 entsprechend den Pfeilen X verschiebbar angeordnet ist. Über Lager 7, 8 ist der Sitzunterbau 6 drehbar um die Rotationsachse A gelagert. Der Antrieb 5 versetzt das Gehäuse 2 über ein Getriebe 9 in Drehung.

## Patentansprüche

1. Fahrzeug (1), mit einem um eine Rotationsachse (A) angeordneten rotationssymmetrischen, insbesondere kugelförmigen, Gehäuse (2) mit einer nach außen gewölbten Antriebs- und Lauffläche, wobei das Gehäuse (2) zumindest teilweise aus transparentem Material gebildet ist, und zumindest eine Türe (3) zum Ein- und Aussteigen zumindest einer Person aufweist, und im Inneren des Gehäuses (2) ein Sitz (4) für die zumindest eine Person, ein Antrieb (5) zur Versetzung des Gehäuses (2) in Rotation, und weiters eine Einrichtung zur Steuerung vorgesehen ist, wobei in der Rotationsachse (A) des Gehäuses (2) Lager (7, 8) zur drehbaren Lagerung eines den Sitz (4) aufnehmenden Sitzunterbaus (6) vorgesehen sind, und der Antrieb (5) am Sitzunterbau (6) angeordnet und mit diesem verbunden ist, **dadurch gekennzeichnet, dass** der Sitz (4) seitlich gegenüber dem Sitzunterbau (6) verschiebbar angeordnet ist.

2. Fahrzeug (1) nach Anspruch 1, **dadurch gekennzeichnet, dass** der Sitz (4) zumindest um 180° gegenüber dem Sitzunterbau (6) verschiebbar angeordnet ist.

3. Fahrzeug (1) nach Anspruch 1 oder 2, **dadurch gekennzeichnet, dass** der Antrieb (5) mit einem in der Rotationsachse (A) des Gehäuses (2) drehfest mit dem Gehäuse (2) verbundenen Koppelelement (16) gekoppelt ist.

4. Fahrzeug (1) nach Anspruch 1 oder 2, **dadurch gekennzeichnet, dass** der Antrieb (5) mit einer Innenfläche (13, 14) des Gehäuses (2) gekoppelt ist.

5. Fahrzeug (1) nach einem der Ansprüche 1 bis 4, **dadurch gekennzeichnet, dass** der Antrieb (5) durch einen Elektromotor gebildet ist.

6. Fahrzeug (1) nach einem der Ansprüche 1 bis 5, **dadurch gekennzeichnet, dass** an der Antriebs- und Lauffläche des Gehäuses (2) Antriebselemente (15), beispielsweise Schaufeln (18), angeordnet sind.

7. Fahrzeug (1) nach Anspruch 6, **dadurch gekennzeichnet, dass** die Antriebselemente (15) bzw. Schaufeln (18) im Gehäuse (2) versenkbar oder wegklappbar angeordnet sind.

8. Fahrzeug (1) nach einem der Ansprüche 1 bis 7, **dadurch gekennzeichnet, dass** eine Einrichtung zur elektrischen Verschiebung des Sitzes (4) gegenüber dem Sitzunterbau (6) vorgesehen ist.

9. Fahrzeug (1) nach einem der Ansprüche 1 bis 8, **dadurch gekennzeichnet, dass** im bzw. am Gehäuse (2) Luftkammern (17) angeordnet sind.

10. Fahrzeug (1) nach Anspruch 9, **dadurch gekennzeichnet, dass** die Luftkammern (17) vorzugsweise einzeln wegklappbar angeordnet sind.

11. Fahrzeug (1) nach einem der Ansprüche 1 bis 10, **dadurch gekennzeichnet, dass** die zumindest eine Türe (3) im geöffneten Zustand als Ausleger zur Stabilisierung des Gehäuses (2) ausgebildet ist.

12. Fahrzeug (1) nach Anspruch 11, **dadurch gekennzeichnet, dass** die zumindest eine Türe (3) doppelwandig ausgebildet ist.

13. Fahrzeug (1) nach einem der Ansprüche 1 bis 12, **dadurch gekennzeichnet, dass** im Gehäuse (2) Luftöffnungen vorgesehen sind.

14. Fahrzeug (1) nach einem der Ansprüche 1 bis 13, **dadurch gekennzeichnet, dass** das Gehäuse (2) in Form eines Ellipsoids ausgebildet ist.

15. Fahrzeug nach einem der Ansprüche 1 bis 14, **dadurch gekennzeichnet, dass** das Gehäuse (2) aus Kunststoff gebildet ist.

## Claims

1. Vehicle (1), comprising a rotation-symmetrical, particularly spherical housing (2) disposed about a rotational axis (A) and having a convex drive and running surface, wherein the housing (2) is at least partially formed of transparent material, and at least one door (3) for at least one person to enter and exit, and inside the housing (2) a seat (4) for the at least one person, a drive (5) for setting the housing (2) in rotation, and furthermore, a device for steering is provided, wherein bearings (7, 8) are provided in the rotational axis (A) of the housing (2) for rotatably supporting a lower seat structure (6) receiving the seat (4), and the drive (5) is disposed on the lower seat structure (6) and connected thereto, **characterized in that** seat (4) is disposed laterally displaceable relative to lower seat structure (6).

2. Vehicle (1) according to claim 1, **characterized in that** seat (4) is displaceably disposed relative to lower seat structure (6) at least by 180°.

3. Vehicle (1) according to claim 1 or 2, **characterized in that** drive (5) is coupled to a coupling element (16) connected to the housing (2) in a non-rotatably manner in the rotational axis (A) of housing (2).

4. Vehicle (1) according to claim 1 or 2, **characterized in that** drive (5) is coupled to an inner surface (13, 14) of housing (2).

5. Vehicle (1) according to one of claims 1 to 4, **characterized in that** drive (5) is formed by an electric motor.

6. Vehicle (1) according to one of claims 1 to 5, **characterized in that** drive elements (15), for example blades (18), are arranged on the drive and running surface of housing (2).

7. Vehicle (1) according to claim 6, **characterized in that** drive elements (15) or blades (18), respectively, are disposed lowerable and foldable in housing (2).

8. Vehicle (1) according Lo one of claims 1 to 7, **characterized in that** a device for electrical displacement of seat (4) relative to lower seat surface (6) is provided.

9. Vehicle (1) according to one of claims 1 to 8, **characterized in that** air chambers (17) are disposed in or on housing (2).

10. Vehicle (1) according to claim 9, **characterized in that** the air chambers (17) are preferably disposed to be folded away individually.

11. Vehicle (1) according to one of claims 1 to 10, **characterized in that** at least one door (3) is in opened condition thereof designed as extension arm for stabilization of housing (2).

12. Vehicle (1) according to claim 11, **characterized in that** the at least one door (3) is designed double-walled.

13. Vehicle (1) according to one of claims 1 to 12, **characterized in that** air openings are provided in housing (2).

14. Vehicle (1) according to one of claims 1 to 13, **characterized in that** the housing (2) is designed in the form of an ellipsoid.

15. Vehicle (1) according to one of claims 1 to 14, **characterized in that** the housing (2) is made of synthetic material.

## Revendications

1. Véhicule (1) comprenant un boîtier (2) à symétrie de révolution, en particulier de forme sphérique, agencé autour d'un axe de rotation (A) avec une surface d'entraînement et de roulement bombée vers l'extérieur, dans lequel le boîtier (2) est réalisé au moins partiellement en matériau transparent, et comprend au moins une porte (3) pour l'entrée et la sortie d'au moins une personne, et à l'intérieur du boîtier (2) il est prévu un siège (4) pour ladite au moins une personne, un entraînement (5) pour mettre le boîtier (2) en rotation, et il est en outre prévu un système pour la commande, dans lequel des paliers (7, 8) sont prévus sur l'axe de rotation (A) du boîtier (2) pour le montage en rotation d'un châssis de siège (6) recevant le siège (4), et l'entraînement (5) est agencé sur le châssis de siège (6) et relié à celui-ci,
**caractérisé en ce que** le siège (4) est agencé déplaçable latéralement par rapport au châssis de siège (6).

2. Véhicule (1) selon la revendication 1, **caractérisé en ce que** le siège (4) est agencé déplaçable sur au moins 180° par rapport au châssis de siège (6).

3. Véhicule (1) selon la revendication 1 ou 2, **caractérisé en ce que** l'entraînement (5) est accouplé avec un élément de couplage (16) relié solidairement en rotation avec le boîtier (2) sur l'axe de rotation (A) du boîtier (2).

4. Véhicule (1) selon la revendication 1 ou 2, **caractérisé en ce que** l'entraînement (5) est couplé à une surface intérieure (13, 14) du boîtier (2).

5. Véhicule (1) selon l'une des revendications 1 à 4, **caractérisé en ce que** l'entraînement (5) est formé par un moteur électrique.

6. Véhicule (1) selon l'une des revendications 1 à 5, **caractérisé en ce que** des éléments d'entraînement (15), par exemple des pales (18), sont agencés sur la surface d'entraînement et de roulement du boîtier (2).

7. Véhicule (1) selon la revendication 6, **caractérisé en ce que** les éléments d'entraînement (15), respectivement les pales (18), sont agencé(e)s de manière à pouvoir être escamot(é)s dans le boîtier (2) ou rabattu(e)s vers l'extérieur.

8. Véhicule (1) selon l'une des revendications 1 à 7, **caractérisé en ce qu'**il est prévu un système pour déplacer électriquement le siège (4) par rapport au châssis de siège (6).

9. Véhicule (1) selon l'une des revendications 1 à 8, **caractérisé en ce que** des chambres à air (17) sont agencées dans, respectivement sur, le boîtier (2).

10. Véhicule (1) selon la revendication 9, **caractérisé en ce que** les chambres à air (17) sont agencées de manière à pouvoir être rabattues vers l'extérieur, de préférence individuellement.

11. Véhicule (1) selon l'une des revendications 1 à 10, **caractérisé en ce que** ladite au moins une porte (3) est réalisée à titre de potence pour la stabilisation du boîtier (2) dans la situation ouverte.

12. Véhicule (1) selon la revendication 11, **caractérisé en ce que** ladite au moins une porte (3) est réalisée à double paroi.

13. Véhicule (1) selon l'une des revendications 1 à 12, **caractérisé en ce que** les ouvertures d'air sont prévues dans le boîtier (2).

14. Véhicule (1) selon l'une des revendications 1 à 13, **caractérisé en ce que** le boîtier (2) est réalisé sous la forme d'un ellipsoïde.

15. Véhicule selon l'une des revendications 1 à 14, **caractérisé en ce que** le boîtier (2) est réalisé en matière plastique.
